# FASCICULE DE BREVET EUROPEEN

(11) **EP 0 677 166 B1**
(45) Date de publication et mention de la délivrance du brevet: **23.08.2000**
(21) Numéro de dépôt: 95900168.6
(22) Date de dépôt: 27.10.1994
(51) Int. Cl.: G01N 17/00

(54) **DISPOSITIF DE SURVEILLANCE DU VIELLISSEMENT DE FLUIDES**
VORRICHTUNG ZUR ÜBERWACHUNG DER ÄLTERUNG VON FLÜSSIGKEITEN
DEVICE FOR MONITORING FLUID AGEING

(30) Priorité: 29.10.1993 FR 9313041
(43) Date de publication de la demande: 18.10.1995
(73) Titulaire: INSTITUT FRANCAIS DU PETROLE, 92500 Rueil Malmaison (FR)
(72) Inventeur: GOLDENBERG, Emmanuel, F-78300 Poissy (FR)
(74) Mandataire: Andreeff, François
(86) Numéro de dépôt international: FR9401253
(87) Numéro de publication internationale: WO9512119

(56) Documents cités:
- WO-A-91/16614
- WO-A-91/17423
- US-A- 3 253 219

## Description

La présente invention concerne le domaine de la surveillance in situ de fluides de refroidissement circulant dans des échangeurs de chaleur, et plus particulièrement de la surveillance de leur niveau de corrosion.

Préférentiellement, la présente invention peut être utilisée pour surveiller à quel moment le liquide de refroidissement circulant dans des moteurs à combustion interne, devient corrosif.

Il est connu que dans un moteur à combustion interne, le liquide de refroidissement, outre sa fonction d'échange thermique permet aussi de protéger le circuit de refroidissement du moteur contre les principales formes de dégradation auxquelles il est soumis. La corrosion par piqûre, l'arrachement de métal par cavitation, la corrosion électro-chimique... sont les formes de dégradation les plus souvent constatées, et qui si elles ne sont pas détectées suffisamment tôt, risquent de créer de fortes perturbations voire l'endommagement du moteur.

Afin d'assurer cette fonction de protection, les liquides de refroidissement nécessitent donc une formulation particulièrement bien étudiée. Ils contiennent des additifs destinés à protéger les différents métaux du circuit de refroidissement.

Cependant, en fonctionnement, la formulation du liquide de refroidissement peut varier par décomposition ou appauvrissement de certains des additifs.

Cette modification pose problème car du liquide de refroidissement peut alors dégrader certains matériaux du circuit.

Actuellement il est nécessaire de remplacer périodiquement et de façon arbitraire le liquide de refroidissement afin d'éviter des attaques du circuits telles que décrites ci-avant.

Parmi les systèmes de détection et de surveillance connus et d'application voisine, le document US 4 792 791 divulgue un dispositif destiné à surveiller la qualité de l'huile de lubrification d'un moteur grâce à la corrosion d'un élément résistant faisant partie d'un circuit électrique.

Lorsque l'élément résistant est corrodé par l'huile dans lequel il est immergé, sa résistance varie puis cette variation est enregistrée et considérée comme un signe de vieillissement de l'huile.

L'exploitation de la variation de résistance d'un élément sensible corrodable est encore divulguée dans les documents US 4 675 662, US 4 782 332 ou dans la demande de brevet FR 2 689 240 déposée au nom du demandeur.

Bien que de tels système donnent satisfaction puisqu'ils permettent de surveiller le vieillissement d'huile ou d'autre liquide de fonctionnement du moteur, ils ne réagissent que lorsque la dégradation ou le vieillissement de l'huile est assez avancée.

Ce type de détecteurs n'est pas assez sensible pour détecter par exemple la corrosion d'une petite zone du circuit qui n'entrainerait aucune variation de résistance. La plupart d'entre eux ne signalent en effet une anomalie qu'à partir d'un certain niveau de dégradation.

En outre si le circuit est constitué de différents matériaux il n'est pas certain que le détecteur soit sensible à tous les matériaux.

Le document WO 91/16614 décrit un indicateur du degré de corrosion d'un fluide del qu'un fluide de refroidissement basé sur une indication visuelle après rupture d'un élément corrodable. Le document US-A-3 253 219 décrit un moyen pour déterminer le degré de corrosion d'un fluide selon lequel un élément piezzo électrique est fixé sur un élément corrodable. Un changement de l'épaisseur de l'élément corrodable creé une variation de la fréquence de l'élément piezzo électrique, cette variation étant considérée comme un indicateur du degré de corrosion.

La présente invention permet de remédier à ces lacunes en proposant un dispositif de surveillance du vieillissement de fluides de refroidissement circulant dans des échangeurs de chaleur, comprenant un élément en contact avec ledit liquide, un élément électrique séparé de l'élément en contact avec le liquide par un volume isolant renfermant un fluide à la pression atmosphérique, ledit élément électrique réagissant au degré de corrosion de l'élément en contact, et une alarme réagissant à une variation du signal de l'élément électrique.

Selon l'invention :
- l'élément en contact avec le liquide à surveiller consiste en au moins une pastille constituée d'un matériau par ailleurs en contact avec ledit liquide dans le circuit,
- l'élément électrique consiste en un élément en un matériau piézo-électrique dont la fréquence varie avec une variation de pression dans le volume isolant.

Avantageusement l'épaisseur de chaque pastille est telle que ladite pastille est perforée ou rompue sous l'effet conjugué de sa propre corrosion et de la différence de pression entre la pression P2 à laquelle est soumis le fluide (3) à surveiller et la pression P1 dans le volume isolant (6), la rupture de la pastille ayant lieu avant que la partie correspondante du circuit soit elle-même notablement corrodée.

Plus précisément, le dispositif selon l'invention peut comporter plusieurs pastilles de natures différentes chacune en un matériau par ailleurs en contact avec le liquide dans le circuit.

Préférentiellement le dispositif selon l'invention est placé à un endroit du circuit où la vitesse de circulation du fluide est la plus grande.

Selon une application particulière, le dispositif selon l'invention est utilisé dans un moteur à combustion interne.

Plus spécifiquement, la présente invention peut être utilisée pour surveiller le vieillissement du liquide de refroidissement circulant dans des moteurs à combustion interne.

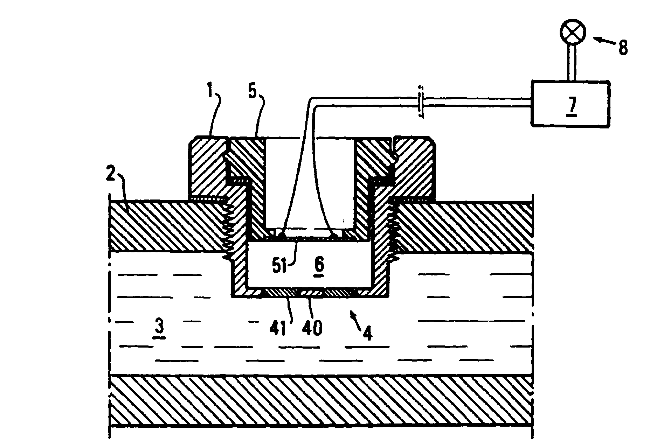

D'autres caractéristiques et avantages de l'invention apparaîtront mieux à la lecture de la description qui va suivre, en référence à l'unique figure annexée.

Selon cette figure le détecteur comprend un corps 1 pouvant être fixé par tout moyen connu en soi sur une tubulure 2 dans laquelle circule le liquide à surveiller. La fixation peut être réalisée par emboitage et verrouillage ou encore par vissage. Une pression P2 règne à l'intérieur de la tubulure 2.

Préférentiellement le détecteur selon l'invention sera placé à un endroit du circuit où la vitesse de circulation du fluide est la plus grande, ou encore là où le fluide change de direction, ceci afin d'avoir un contact maximum avec le liquide à surveiller 3 et d'amplifier l'effet de cavitation.

Le corps 1 du détecteur peut être par exemple cylindrique, avec au moins un premier fond 4 en contact avec le liquide à surveiller 3. Le premier fond 4 peut être obturé par un disque étanche 40 sur lequel sont fixées de préférence plusieurs membranes (ou pastilles) sensibles 41 dont les caractéristiques vont être décrites ci-après.

Sans sortir du cadre de l'invention, les pastilles 41 peuvent être fixées directement sur le fond 4.

L'autre extrémité du corps 1, qui n'est pas en contact avec le liquide 3, est obturé par un second fond 5 déformable, fixé sur le corps 1 de façon à créer un volume étanche 6 à l'intérieur du corps 1. Une pression P1, telle que par exemple la pression atmosphérique, règne à l'intérieur du volume 6.

Sur le second fond 5 est fixé un élément piézo-électrique 51 faisant partie d'un circuit électrique 7, ledit circuit dont la source peut être par exemple la batterie du moteur, comporte en outre un moyen d'alarme 8 réagissant à toute variation de fréquence de l'élément piézo-électrique.

La ou les pastilles sensibles sont corrodables, chacune de natures différentes; avantageusement, chacun des matériaux, en contact avec le liquide à surveiller peut constituer le matériau d'une pastille. Bien entendu si l'on ne souhaite surveiller la corrosion que d'un seul matériau ou si tout le circuit est constitué d'un unique matériau, alors une seule pastille 41 suffit.

L'épaisseur de chaque pastille, qui n'est qu'une fraction de l'épaisseur du matériau équivalent dans le circuit, est calibrée en tenant compte notamment de l'épaisseur du matériau équivalent dans le circuit, des propriétés physico-chimiques de ce matériau (notamment de sa vitesse de corrosion), et des différence de pression entre la pression P2 dans la tubulure 2 et la pression P1 dans le volume 6 à l'intérieur du détecteur; la pression P2 étant normalement supérieure à la pression P1 dans le volume étanche et isolant 6.

Le fonctionnement du détecteur selon l'invention est le suivant :

Lorsque l'une des pastilles sensibles 41 est corrodée au point que le liquide à surveiller déchire ou perfore ladite pastille, ledit liquide 3 remplit brusquement le volume interne 6 et vient au contact de l'élément piézo-électrique 51, ce qui provoque un changement de la fréquence d'oscillation de ce dernier.

Ce changement est immédiatement détecté au niveau du circuit électrique 7 et provoque la mise en route de l'alarme 8.

Bien entendu, l'alarme 8 peut prendre toute forme appropriée pour l'application envisagée : témoin lumineux, signal sonore...

La ou les pastilles sensibles 41 sont bien évidemment conçues de telle façon qu'elles se déchirent bien avant que le matériau correspondant du circuit ne subisse un sort analogue; de préférence la rupture des pastilles sensibles a lieu dès le début de l'apparition du phénomène à surveiller, c'est-à-dire bien avant que le circuit ne soit endommagé.

La fixation des pastilles 41 sur le fond 4 peut être obtenue par collage ou par sertissage, avec ou sans joint isolant.

Dans ce dernier cas, on ajoute au phénomène de corrosion due au vieillissement du liquide de refroidissement, une corrosion due aux intéractions électrochimiques entre les différents matériaux qui constituent le détecteur. Ceci peut être intéressant lorsque l'on souhaite rendre les pastilles encore plus sensibles à la corrosion.

## Revendications

1. Dispositif de surveillance du vieillissement de fluides de refroidissement circulant dans des circuits échangeurs de chaleur, comprenant un élément (4) en contact avec ledit fluide (3), un élément électrique (51) faisant partie d'un circuit électrique (7) et séparé de l'élément (4) en contact avec le fluide (4) par un volume isolant (6) renfermant un fluide à une pression donnée P1, ledit élément électrique (51) réagissant au degré de corrosion de l'élément en contact, et une alarme (8) réagissant à une variation du signal de l'élément électrique, caractérisé en ce que
- l'élément (4) en contact avec le liquide à surveiller consiste en au moins une pastille (41) constituée d'un matériau par ailleurs en contact avec ledit fluide (3) dans le circuit, et en ce que
- l'élément électrique (51) consiste en un élément en un matériau piézo-électrique dont la fréquence varie avec une variation de pression dans ledit volume isolant (6).

2. Dispositif selon la revendication 1, caractérisé en ce que l'épaisseur de chaque pastille est telle que ladite pastille est perforée ou rompue sous l'effet conjuré de sa propre corrosion et de la différence de pression entre la pression P2 à laquelle est soumis le fluide (3) à surveiller et la pression P1 dans le volume isolant (6), la rupture de la pastille ayant lieu avant que la partie correspondante du circuit soit elle-même notablement corrodée.

3. Dispositif selon la revendication 2, caractérisée en ce qu'il comporte plusieurs pastilles (41) de natures différentes, chacune en un matériau par ailleurs en contact avec ledit fluide dans le circuit.

4. Dispositif selon l'une quelconque des revendications précédentes caractérisé en ce que l'épaisseur de l'une au moins des pastilles (41) est une fraction de l'épaisseur du matériau équivalent dans le circuit.

5. Utilisation du dispositif selon l'une quelconque des revendications précédentes, dans un moteur à combustion interne.

6. Utilisation selon la revendication 5, pour surveiller le vieillissement du liquide de refroidissement circulant dans des moteurs à combustion interne.

## Claims

1. Device for monitoring the ageing of cooling fluids circulating in heat exchangers, comprising an element (4) in contact with said fluid (3), an electrical element (51) forming part of an electric circuit (7) and separated from the element (4) in contact with the fluid (4) by an insulating volume (6) enclosing a fluid at a given pressure P1, said electrical element (51) reacting to the degree of corrosion of the contact element, and an alarm (8) reacting to a variation in the signal from the electrical element, characterised in that:
- the element (4) in contact with the liquid to be monitored consists of at least one chip (41) comprised of a material which is also in contact with said fluid (3) in the circuit, and that:
- the electrical element (51) consists of an element in a piezo-electric material, the frequency of which varies with a variation of the pressure in said insulating volume (6).

2. Device according to Claim 1, characterised in that the thickness of each chip is such that said chip will be perforated or broken under the effect incurred by its own corrosion and by the difference in pressure between the pressure P2 to which the fluid (3) to be monitored is subjected and the pressure P1 in the insulating volume (6), the breaking of the chip taking place before the corresponding part of the circuit itself is perceptibly corroded.

3. Device according to Claim 2, characterised in that it comprises several chips (41) of different natures, each in a material which is also in contact with said fluid in the circuit.

4. Device according to any of the preceding claims, characterised in that the thickness of at least one of the chips (41) is a fraction of the thickness of the equivalent material in the circuit.

5. Use of the device according to any of the preceding claims in an internal combustion engine.

6. Use according to Claim 5 for monitoring the ageing of the cooling liquid circulating in internal combustion engines.

## Patentansprüche

1. Vorrichtung zur Überwachung des Alterns von Kühlfluiden, welche in Wärmeaustauscherkreisen zirkulieren, umfassend ein Element (4) in Kontakt mit dem Fluid (3), ein elektrisches Element (51), das einen Teil eines elektrischen Kreises (7) bildet und von dem mit dem Fluid in Kontakt stehenden Element (4) durch ein isolierendes Volumen (6) getrennt ist, das eine Fluid bei einem gegebenen Druck P1 umschließt, wobei dieses elektrische Element (51) auf den Korrosionsgrad des in Kontakt stehenden Elementes reagiert und ein Alarm (8) auf eine Veränderung des Signals des elektrischen Elements reagiert, dadurch gekennzeichnet, daß das
- in Kontakt mit dem zu überwachenden Fluid stehende Element (4) aus wenigstens einer Tablette (41) besteht, die aus einem Material gebildet ist, welches im übrigen in Kontakt mit dem Fluid (3) im Kreis steht, und daß das
- elektrische Element (51) aus einem Element aus einem piezoelektrischen Material besteht, dessen Frequenz mit einer Veränderung des Drucks in diesem isolierenden Volumen 6 variiert.

2. Vorrichtung nach Anspruch 1, dadurch gekennzeichnet, daß die Dicke jeder Tablette derart ist, daß diese Tablette unter dem konjugierten Effekt ihrer eigenen Korrosion und des Druckunterschieds, zwischen dem Druck P2, dem das zu überwachende Fluid (3) ausgesetzt wird und dem Druck P1 im isolierenden Volumen 6 perforiert oder gebrochen wird, wobei das Brechen der Tablette stattfindet, bevor der entsprechende Teil des Kreises selbst merklich korrodiert ist.

3. Vorrichtung nach Anspruch 2, dadurch gekennzeichnet, daß sie mehrere Tabletten (41) unterschiedlicher Natur umfaßt, jede aus einem Material, das im übrigen in Kontakt mit dem Fluid im Kreis steht.

4. Vorrichtung nach einem der vorhergehenden Ansprüche, dadurch gekennzeichnet, daß die Dicke wenigstens einer der Tabletten (41) ein Teil der Dicke des equivalenten Materials im Kreis ist.

5. Verwendung der Vorrichtung nach einem der vorhergehenden Ansprüche in einer Brennkraftmaschine.

6. Verwendung nach Anspruch 5, zur Überwachung der Alterung der in den Brennkraftmaschinen zirkulierenden Kühlflüssigkeit.
